Europäisches Patentamt

European Patent Office

Office européen des brevets

(11) Veröffentlichungsnummer: **0 131 898**
**A2**

## (12) EUROPÄISCHE PATENTANMELDUNG

(21) Anmeldenummer: **84108116.9**

(22) Anmeldetag: **11.07.84**

(51) Int. Cl.⁴: **C 01 B 33/28**
**B 01 J 29/06**

(30) Priorität: **15.07.83 DE 3325515**

(43) Veröffentlichungstag der Anmeldung:
**23.01.85 Patentblatt 85/4**

(84) Benannte Vertragsstaaten:
**DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Rieck, Hans-Peter, Dr.**
**Staufenstrasse 13a**
**D-6238 Hofheim am Taunus(DE)**

(54) Verfahren zur Herstellung von Aluminiumsilikaten mit Zeolithstrukturen.

(57) Beschrieben wird ein Verfahren zur Herstellung eines Zeoliths des ZSM-5-Typs in wäßriger Phase, ausgehend von einer Alkalioxid-Quelle, einer Siliciumdioxid-Quelle, einer Aluminiumoxid-Quelle und gegebenenfalls einer die Kristallisation des Zeoliths begünstigenden Substanz. Das eingesetzte Molverhältnis $SiO_2/Al_2O_3$ beträgt 12:1 bis 500:1. Die Komponenten werden in einen Rührkessel eindosiert und bei Temperaturen von 90 bis 250°C mindestens so lange reagieren gelassen, daß 10 % des eingesetzten $SiO_2$ in den Zeolith umgewandelt werden. Die Komponenten werden bei Temperaturen von 90 bis 250°C eindosiert. Die Reaktion wird kontinuierlich oder halbkontinuierlich durchgeführt; die Zugabedauer jeder einzelnen Komponente soll 1 bis 100 % der Reaktionsdauer betragen.

EP 0 131 898 A2

### Verfahren zur Herstellung von Aluminiumsilikaten mit Zeolithstrukturen

Die vorliegende Erfindung betrifft ein Verfahren zur Herstellung von silikatreichen Aluminiumsilikaten mit Zeolithstruktur des Typs ZSM-5 in wäßriger Phase.

Verschiedene Zeolithe haben große technische Bedeutung erlangt, da sie als Ionenaustauscher, Molekularsiebe und Katalysatoren eingesetzt werden können. In letzter Zeit finden Zeolithe vom Pentasil-Typ, zu dem insbesondere der Zeolith ZSM-5 gehört, zunehmendes Interesse, da sie bei verschiedenen Alkylierungen und Isomerisierungen sehr wirksam sind und die Umwandlung von Methanol in Olefine, Aromaten und – zu einem geringen Teil – in gesättigte Kohlenwasserstoffe katalysieren.

Zeolithe werden im allgemeinen diskontinuierlich erzeugt, da bei ihrer Herstellung Reaktionszeiten von mehreren Stunden, häufig jedoch auch von mehr als einem Tag erforderlich sind. Da die Reaktionstemperatur im allgemeinen über 100°C liegt, wird meist bei Überdruck gearbeitet. Dies macht eine kontinuierliche Zugabe der Ausgangskomponenten technisch aufwendiger. Schließlich ist der Zeolith ZSM-5 thermodynamisch instabil gegenüber anderen Zeolith-Typen und Silikatformen. Man hat deshalb in der Technik eine möglichst rasche Zugabe der Komponenten und eine ebenfalls rasche Entfernung des vollständig auskristallisierten Zeoliths aus dem Reaktor angestrebt.

Ein kontinuierliches Verfahren zur Herstellung von kristallinen Zeolithen wird in der europäischen Patentanmeldung 21 675 beschrieben. Da ein Strömungsrohr verwendet werden muß, ähnelt das Verweilzeitspektrum dem eines diskontinuierlichen Rührkessels, wobei dem zeitlichen Verlauf der räumliche Verlauf im Strömungsrohr entspricht. In beiden Fällen werden Ausgangsmischungen der Reaktionszone zugeführt, zu kristallinem Zeolith umgesetzt und dieser nach der Umsetzung vollständig entfernt. Bei diesem Verfahren wird eine Rückvermischung bewußt dadurch vermieden, daß ein rohrförmiger Reaktor verwendet wird. Obwohl dieser gerührt werden kann, so wird doch durch das hohe Verhältnis Länge/Durchmesser und die Konstruktion des Rührers eine Rückvermischung weitgehend unterbunden. Der Verhinderung der Rückvermischung dient auch, daß die Reaktionskomponenten an einem Ende des Reaktors zugegeben und das Reaktionsprodukt am anderen Ende des Reaktors abgezogen wird und daß einzelne Reaktionskomponenten auf dem "Reaktionsweg" eindosiert werden. Ein Nachteil dieses bekannten Verfahrens besteht darin, daß ein konstruktiv aufwendiger Reaktor verwendet werden muß.

Es bestand daher die Aufgabe, ein Verfahren zur Herstellung von Zeolithen des Typs ZSM-5 zu finden, das Zeitverluste wegen des Aufheizens und Abkühlens des Reaktors vermeidet, möglichst kontinuierlich arbeitet, d.h. hohe Raum-Zeit-Ausbeuten liefert und mit einer konstruktiv einfachen Reaktionsapparatur auskommt, die auch bei Arbeiten unter erhöhtem Druck verwendet werden kann.

Es wurde nun ein Verfahren zur Herstellung eines Zeoliths des ZSM-5-Typs in wäßriger Phase gefunden, bei dem man von einer Alkalioxid-Quelle, einer Siliciumdioxid-Quelle, einer Aluminiumoxid-Quelle und ggf. einer die Kristallisation des Zeoliths begünstigenden Substanz ausgeht, wobei das eingesetzte Molverhälnis $SiO_2/Al_2O_3$ 12:1 bis 500:1 beträgt, man die Komponenten in einen Rührkessel eindosiert und bei Temperaturen von 90 bis 250°C mindestens solange reagieren läßt, daß 10 % des eingesetzten $SiO_2$ in den Zeolith

umgewandelt werden. Dieses Verfahren ist dadurch gekennzeichnet, daß man die Komponenten bei Temperaturen von 90 bis 250°C eindosiert, man die Reaktion kontinuierlich oder halbkontinuierlich durchführt, wobei die Zugabedauer jeder einzelnen Komponente 1 bis 100 % der Reaktionsdauer betragen soll.

Die $SiO_2$-Quelle kann aktive Kieselsäure, wie z.B. pyrogene Kieselsäure, oder kolloidale Kieselsäure sein. Andere, verwendbare $SiO_2$-Quellen sind aus der Europäischen Offenlegungsschrift 54386 bekannt. Bevorzugt wird im allgemeinen das preiswerte Wasserglas.

Als Alkalioxid-Quelle kann Alkalihydroxid oder der Alkalioxidanteil des zugegebenen Wasserglases oder Alkalialuminats fungieren. Jedoch können auch andere alkalisch reagierende Salze, wie z.B. Alkalicarbonat, zugesetzt werden. Unter den Alkaliverbindungen sind die Natriumverbindungen bevorzugt. Es ist bevorzugt, wenn der pH-Wert der zu erhitzenden wäßrigen Lösung oder Suspension im Bereich von 8 bis 12 liegt. Es ist zulässig, zur Einstellung des pH-Werts eine Säure, beispielsweise Schwefelsäure oder Phosphorsäure, dem Reaktionsansatz zuzufügen. Bei niedrigen Molverhältnissen von $OH^-/SiO_2$ werden kürzere Reaktionszeiten benötigt, jedoch steigt dabei die Gefahr, daß amorphe Anteile auftreten.

Geringe Aluminiumgehalte im angestrebten Zeolith können bereits ohne Zugabe eigener Aluminiumoxidquellen auftreten, wenn von technischem Wasserglas ausgegangen wird, das Aluminium als Verunreinigung enthält. Werden höhere Aluminium-Gehalte angestrebt, so kann man dem Reaktionsansatz eine Aluminiumverbindung, beispielsweise frisch gefälltes Aluminiumhydroxid, Natriumaluminat oder Aluminiumsulfat zusetzen.

Für die Kristallisation des gewünschten Zeoliths ist mitunter die Zugabe von Substanzen vorteilhaft, die die Kristallisation bestimmter Zeolith-Typen fördern (Template). Bei den organischen Templaten handelt es sich insbesondere um Stickstoff- oder Phosphorverbindungen. Hierbei seien vor allem Tetraalkylammonium- bzw. Tetraalkylphosphonium-Verbindungen, insbesondere mit $C_2$ bis $C_4$-Alkylgruppen genannt, ferner Alkylamine, Alkylendiamine und cyclische Amine. Verwendbar sind aber auch stickstofffreie Verbindungen, wie Alkohole und Äther. Der Einsatz dieser Verbindungen bei der Synthese von Zeolithen ist aus der folgenden Patentliteratur bekannt. US-PS 3 702 886, US-PS 3 709 979, US-PS 3 832 559, US-PS 4 016 245, US-PS 4 046 859, US-PS 4 076 842, DE-OS 2 212 810, DE-OS 2 213 109, DE-OS 2 817 577, DE-OS 2 848 849, DE-OS 2 909 930, DE-OS 3 031 847, DE-OS 3 047 798, EU-OS 22 640, EU-OS 30 811, EU-OS 31 255, EU-OS 41 621 und EU-OS 42 225.

Bei anderen Verfahrensvarianten werden keine organischen Substanzen, sondern anorganische Template zugesetzt. Für ZSM-5-artige Zeolithe kann als anorganische Base Ammoniak (EU-OS 30811) zugesetzt werden. In der DE-OS 2 935 135 wird der Zusatz von Kristallkeimen zur Regulierung der Kristallstruktur beschrieben. Die Kristallisation zu einem ZSM-5-artigen Zeolith wird auch begünstigt durch Aluminiumphosphat, insbesondere kristallinem Aluminiumphosphat der Formel $AlPO_4$. Von dem Zusatz von Kristallkeimen kann auch bei vorliegendem Verfahren Gebrauch gemacht werden, damit sich im Reaktionsansatz rascher das stationäre Gleichgewicht einstellt.

Vorzugsweise beträgt die Reaktionstemperatur im Rührkessel 120 bis 220°C und insbesondere 150 bis 200°C. Bei Reaktionstemperaturen über 100°C werden die Umsetzungen bei einem Druck ausgeführt, der sich über der wäßrigen Reaktionsmischung einstellt. Eine zusätzliche Druckerhöhung durch Zugabe eines Inertgases bringt im allgemeinen keine Vorteile. Da die Umsetzungen im allgemeinen aufgrund der Reaktionstemperatur bei Überdruck durchgeführt werden, ist die Verwendung von Rührautoklaven erforderlich. In diesem Gefäß soll eine gute Durchmischung der Reaktionskomponenten und der Reaktionsmischung möglich sein. Deshalb ist es bevorzugt, wenn das Verhältnis von Höhe zu Durchmesser des Reaktors kleiner als 2 ist.

Auch während der Zugabe der Reaktionskomponenten soll die Temperatur im angegebenen Temperaturintervall liegen. Dies ist besonders leicht möglich, wenn die zugegebenen Substanzen bereits aufgeheizt sind.

Da im Regelfall der Druck im Rührkessel größer als 1 bar ist, ist für das Eindosieren der Reaktionskomponenten eine Pumpe notwendig. Es kann hierfür eine einzige Pumpe ausreichend sein; es ist jedoch auch möglich, einzelne Komponenten getrennt zuzugeben, so daß 2 oder auch 3 Pumpen an verschiedenen Zulaufstellen des Autoklaven erforderlich werden. Es ist bevorzugt, saure Reaktionskomponenten (z.B. Aluminiumsulfat, Phosphorsäure) und basische Reaktionskomponenten (z.B. Natriumaluminat, Natriumsilikat, Natronlauge) getrennt einzudosieren, um eine vorzeitige Gelbildung zu vermeiden.

Die Ausgangsprodukte können nacheinander zugegeben werden; bevorzugt wird jedoch eine gleichzeitige Zugabe. Es ist bevorzugt, wenn die Zugabedauer für jede Komponente 10 bis 100, insbesondere 20 bis 80 % der Reaktionsdauer (mittlere Verweilzeit) beträgt.

Wenn während der Zugabe nicht gleichzeitig Produkt abgeführt wird, so steigt der Inhalt im Rührgefäß an. Die Zugabe muß dann spätestens beendet werden, wenn der maximale Füllstand erreicht ist. Wenn die Komponenten sehr rasch zugegeben werden, muß im Reaktionsgefäß noch weiter gerührt werden, um eine ausreichende Bildung von Zeolith durch Nachkristallisation zu erreichen. Anschließend wird das Produkt aus dem noch heißen Autoklaven entfernt. Es kann jedoch vorteilhaft sein, diese Nachkristallisation in einem zweiten Gefäß, das ebenfalls als Rührgefäß ausgebildet ist, durchzuführen. Die Dauer der Nachkristallisation soll maximal der 99-fachen, vorzugsweise maximal der 20-fachen und insbesondere (bei hohen Temperaturen) nur der 9-fachen oder sogar nur der 4-fachen Zugabedauer entsprechen.

Vorteilhafterweise wird das erste, bzw. einzige Rührgefäß nie vollständig entleert, sondern es soll stets Produktmischung enthalten, die aus dem auskristallisierten Aluminiumsilikat und der Mutterlauge inklusive nicht umgesetzter Ausgangsprodukte besteht. Damit verbleibt ein hoher Anteil an Zeolith-Kristallen im Autoklaven, wodurch die weitere Bildung von Zeolith gefördert wird.

Das Gewichtsverhältnis von Zeolith-Kristallen zu gelöstem $SiO_2$ in der Reaktionsmischung soll (nach Einstellen stationärer Bedingungen) über 0,05, vorzugsweise über 0,1 und insbesondere über 0,2 liegen. Bei vollkontinuierlicher Reaktionsführung werden dabei konstante Werte erhalten, die häufig über 0,5 liegen. Bei teilkontinuierlicher Reaktionsführung werden diese Werte zeitweise über- und zeitweise unterschritten.

Bei vollkontinuierlicher Reaktionsführung und idealer Durchmischung ist es auch möglich, daß im Rührkessel, wie auch im ausgetragenen Produkt, mehr kristalliner Zeolith als gelöstes Silikat vorhanden ist.

Soll das Produkt aus dem noch unter Druck befindlichen Autoklaven entleert werden, so kann dies mit einem entsprechenden Bodenablaßventil erreicht werden. Wenn keine vollständige Entleerung gewünscht wird, so kann das Produkt vorteilhafterweise über ein Steigrohr entleert werden, das in die Reaktionsmischung eintaucht und mit einem Ventil verschlossen wird. Durch die Länge des Steigrohres wird festgelegt wieviel Produkt maximal entfernt werden kann.

Vorteilhafterweise wird das erfindungsgemäße Verfahren vollkontinuierlich betrieben. Neben der kontinuierlichen Zuführung der Ausgangskomponenten ist hierfür ein kontinuierlicher Austrag der Reaktionsprodukte erforderlich. Dies kann beispielsweise mit einem Steigrohr geschehen. Zur Überwachung des Reaktionsgefäßes kann es erforderlich sein, den Füllstand durch eine Füllstandsanzeige oder durch eine Gewichtsmessung des Apparates zu kontrollieren.

Bei höheren Reaktionstemperaturen sind geringe Reaktionszeiten erforderlich. Bei Temperaturen oberhalb 180°C reichen mitunter Zeiten von weniger als 1 Stunde aus, um mindestens 10 % des zugegebenen Silikats als Zeolith auszukristallisieren. Es können jedoch auch Reaktionszeiten von mehreren Tagen erforderlich werden. Man kann die von den jeweiligen Reaktionsbedingungen abhängigen erforderliche Reaktionszeiten durch Röntgenbeugungsdiagramme einzelner Proben ermitteln. Nach dem erfindungsgemäßen Verfahren lassen sich Aluminiumsilikate herstellen, die ausschließlich die für ZSM-5-artige Zeolithe typischen Röntgenreflexe zeigen.

Das Verhältnis von kristallinem Zeolith zu gelöstem Silikat wird in der Hauptsache durch die mittlere Verweilzeit wie auch durch die Zusammensetzung (insbesondere den pH-Wert) bestimmt. Eine Erhöhung der mittleren Verweilzeit erhöht den Zeolithanteil, begünstigt mitunter jedoch auch die Bildung von Nebenprodukten. Aus wirtschaftlichen Gründen kann es sinnvoll sein, bei kürzeren Verweilzeiten sich mit einem geringeren Anteil an Zeolith zufrieden zu geben.

Neben Aluminium können bei der Synthese auch andere Elemente, insbesondere Bor, Indium, Gallium in geringen Mengen in das Kristallgitter eingebaut werden. Ebenso können Metalle der ersten und zweiten Hauptgruppe oder der dritten bis achten Nebengrupe während der Reaktion oder auch nachträglch eingebaut werden. Die Menge an Metall, die in den Zeolith eingebaut wird, kann bis etwa 25 Gew.-% betragen.

Bei geringen Anteilen dieser Elemente wird die Kristallstruktur des Zeoliths nicht wesentlich verändert. Eine nachträgliche Einführung kann so erfolgen, daß der Zeolith mit einer wäßrigen Lösung imprägniert wird, in der mindestens eine Metallverbindung gelöst ist. Die meisten Metallverbindungen lassen sich dabei durch Kalzinieren in die Metalloxide überführen.

Die nach dem erfindungsgemäßen Verfahren hergestellten Zeolithe zeigen Molsiebeigenschaften und sind deshalb zu Adsorptionszwecken einsetzbar. Weiterhin sind sie in Abhängigkeit von ihrer Struktur und analytischen Zusammensetzung als Katalysatoren, beispielsweise für Crack- oder Hydrocrack-Verfahren, für Isomerisierungsreaktionen, Alkylierungen und für die Methanolumwandlung verwendbar.

Für katalytische Zwecke werden die erhaltenen Zeolithe in der Regel nicht unmittelbar, sondern erst nach einer Aktivierung eingesetzt. Hierzu werden die Alkaliionen gegen andere oben erwähnte Kationen, insbesondere auch gegen Wasserstoffionen, ausgetauscht. Dies kann mit Hilfe von bekannten Ionenaustausch-Reaktionen erfolgen. Eine Kalzinierung des Zeoliths vor dem Ionenaustausch ist bei Verwendung von Tetraalkylammoniumsalzen notwendig, bei organischen Verbindungen mit kleinem Moleküldurchmesser oder bei Verzicht auf organische Verbindungen aber nicht erforderlich. Vorzugsweise wird bei Temperaturen über 400°C kalziniert.

Die Erfindung wird durch die Beispiele näher erläutert.

<u>Beispiel</u>

<u>a) Versuchsapparatur</u>

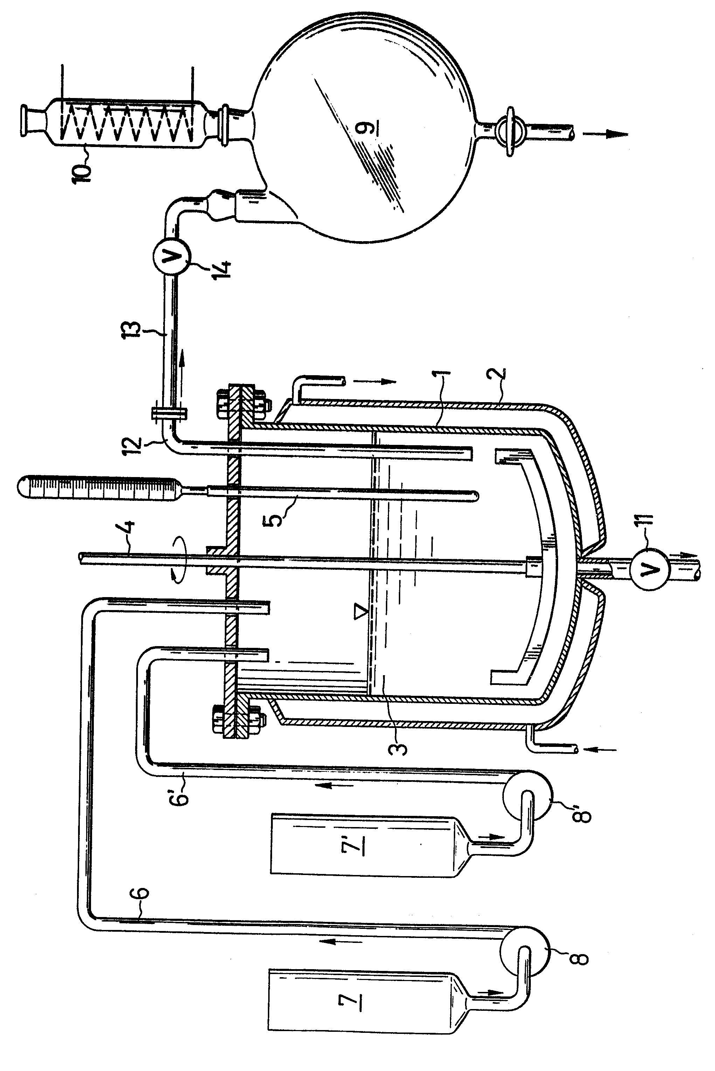

Die verwendete Apparatur ist in der Figur dargestellt. Der Rührautoklav (1) hat ein Nettovolumen von etwa 2 l, einen Innendurchmesser von 14 cm und eine maximale Innenhöhe von 17,5 cm. Er wird mit Öl durch den Heizmantel (2) beheizt. Die in (1) entstandene Reaktionsmischung (3) wird durch einen Rührer (4) gut durchmischt. Die Innentemperatur wird mit einem Thermometer in einer Thermometerhülse (5) kontrolliert. Die Temperaturmessung wird zur Regelung der Öltemperatur verwendet, um eine Temperaturkonstanz von (3) zu erreichen. Die Ausgangsprodukte werden in den Vorratsgefäßen (7) und (7') vorgelegt und mit Hilfe der Pumpen (8) und (8') über die Leitungen (6) und (6') dem Rührautoklav zugeführt. (7) enthält das Wasserglas mit Wasser verdünnt, (7') die restlichen Ausgangsprodukte. Durch Einstellung der Hubhöhe und der Frequenz der Pumpen wird die Zugabedauer gesteuert. Die Zuleitungen sind durch die Ventile (nicht gezeichnet) verschlossen. Der Rührautoklav ist weiterhin mit einem Manometer (nicht gezeichnet) und einem Sicherheitsventil (nicht gezeichnet) versehen.

Das Reaktionsprodukt kann bei Beendigung des Versuchs über das Bodenauslaßventil (11) ausgetragen werden. Für eine nur teilweise Entleerung des Autoklaven (1) wird das Produkt über das Steigrohr (12) und Leitung (13) ausgetragen. Leitung (13) ist mit Ventil (14) versehen. Durch entsprechende Regelung von (14) wird das Produkt portionsweise oder kontinuierlich ausgetragen. Der Füllstand von (3) entspricht der Innenhöhe unterhalb des Steigrohrs und maximal der Innenhöhe des Autoklaven. Das Produkt wird über Leitung (13) in den 2 l-Zweihalskolben (9) überführt, der mit einem Rückflußkühler (10) zur Kondensation des Wasserdampfes versehen ist. Der Kolben (9) wird portionsweise kontinuierlich entleert. Das Produkt wird filtriert, gewaschen und in bekannter Weise aufgearbeitet.

b) **Versuchsdurchführung** (halbkontinuierlich)

Der Rührautoklav (1) wird mit 445 g Natriumwasserglas (27 % $SiO_2$, 8,43 % $Na_2O$, 0,24 % $Al_2O_3$), 1 189 g Wasser, 10 g Aluminiumphosphat (38 % $Al_2O_3$, 52 % $P_2O_5$, 10 % Gewichtsverlust beim Erhitzen auf 600°C), 27,8 g 85 %iger Phosphorsäure und 20 g ZSM-5-artigen Zeolith (aus einem entsprechenden früheren Versuch) gefüllt.

Die Reaktionsmischung hat folgende molare Zusammensetzung:

0,303 $Na_2O$ : 0,024 $Al_2O_3$ : $SiO_2$ : 0,079 $P_2O_5$ : 41 $H_2O$

Der zugefügte Zeolith bleibt dabei unberücksichtigt.

Die Reaktionsmischung wird 5,5 h bei 190°C gerührt, anschließend werden über das Steigrohr (12) ca. 1 400 ml Produktmischung abgelassen. Diese wird filtriert, der abgetrennte Feststoff getrocknet. Man erhält 95 g kristallines Produkt. Das Röntgenbeugungsdiagramm zeigt das typische Bild eines ZSM-5-artigen Zeolith.

Zu der im Rührautoklaven verbliebenen Produktmischung wird bei einer Innentemperatur von 160 - 164°C innerhalb 40 Minuten erneut die oben beschriebene Summe der Ausgangsprodukte (ohne Zeolith) über die beiden Pumpen zudosiert. Die Leitungen werden mit insgesamt 150 ml Wasser anschließend gespült. Die Reaktionsmischung wird zwei Stunden bei 200°C gerührt; anschließend werden innerhalb 10 Minuten ca. 1 500 ml Produktmischung über das Steigrohr abgelassen. Man erhält daraus 72 g ZSM-5-artigen Zeolith. Zu der verbliebenen Produktmischung wird bei 185°C innerhalb 45 Minuten erneut die oben beschriebene Summe der Ausgangsprodukte gepumpt. Der Autoklav wird 16,5 Stunden bei 170°C gerührt. 1 150 ml Produktmischung werden abgelassen; daraus werden 96 g Zeolith erhalten. Zu der verbliebenen Produktmischung wird erneut die oben beschriebene Summe der Ausgangsprodukte zugepumpt. Anschließend wird 4,5 Stunden bei 200°C gerührt. Über das Steigrohr werden etwa 1 500 ml Produktmischung entfernt. Daraus werden nach Trocknung bei 120°C 82 g Zeolith erhalten. Der Autoklav wird abgekühlt und vollständig entleert. Man erhält aus der verbliebenen Produktmischung von etwa 420 ml nach Trocknug 52 g Zeolith. Die Kristallinität aller Zeolithproben ist sehr gut. Das Röntgenbeugungsdiagramm der letzten Probe ist in Tabelle 1 aufgeführt.

Beispiel 2

Die Umsetzung erfolgt unter gleichzeitiger Zugabe der Edukte und Abführung der Produkte mit Nachkristallisation.

Die Versuchsapparatur entspricht der von Beispiel 1. Der Rührautoklav wird mit den in Beispiel 1 beschriebenen Ausgangsmaterialien gefüllt. Die Menge an zugegebenem Zeolith wird auf 50 g erhöht. Nach dem Aufheizen des Rührgefäßes auf 200°C und zweistündiger Rührung (zur Nachkristallisation) bei konstanter Temperatur wird innerhalb einer Stunde eine gleiche Reaktionsmischung wie zu Beginn (ohne Zeolith) mit Hilfe der Pumpen zudosiert, und gleichzeitig werden etwa 1550 ml Reaktionsmischung über das Steigrohr abgelassen. Der Füllstand im Reaktionsgefäß bleibt so annähernd konstant. Die abgelassene Reaktionsmischung wird nach dem Abkühlen filtriert, der Filterkuchen getrocknet. Man erhält 117 g eines ZSM-5-artigen Zeoliths, dessen Röntgenbeugungsdiagramm nur die für Zeolithe vom ZSM-5-Typ charakteristischen Reflexe aufweist.

Die Reaktionsmischung im Autoklaven wird erst eine Stunde bei 200°C und dann 17 Stunden (über Nacht) bei 75°C gerührt. Die Temperatur wird auf 200°C erhöht; anschließend wird innerhalb zwei Stunden die obige Eduktmischung (ohne Zeolith) zugepumpt, und gleichzeitig werden etwa 2 l Produktmischung ausgetragen. Die Produktmischung wird filtriert, getrocknet und röntgenographisch untersucht. Das Produkt zeigt die typischen Röntgenreflexe eines ZSM-5-artigen Zeoliths. Daneben werden in sehr geringer Menge Reflexe eines Mordenitartigen Zeoliths beobachtet. Die Reaktionsmischung im Autoklaven wird weitere zwei Stunden gerührt und dann über das Steigrohr ausgetragen.

Beispiel 3

Die Versuchsapparatur entspricht der in Beispiel 1.

Im Autoklaven werden 200 g Wasser vorgelegt und auf 175°C erwärmt. Im Vorratsgefäß (7) werden 21,7 g $Al_2(SO_4)_3$, 18 g $H_2O$, 13,2 g 85%ige Phosphorsäure und Wasser (auf 500 ml aufgefüllt) vorgelegt. Im Vorratsgefäß (7') werden 20,3 g Tetrapropylammoniumhydroxid (als 20 %ige wäßrige Lösung), 445,2 g Natriumwasserglas (27 % $SiO_2$, 8,43 % $Na_2O$, 0,24 % $Al_2O_3$) und Wasser (ca. 550 ml) vorgelegt. Die Ausgangslösungen werden mit Hilfe der Pumpen (8) und (8') über die Leitungen (6) und (6') dem heißen Rührautoklaven gleichzeitig zugeführt. Die Zugabedauer beträgt sieben Stunden. Die Temperatur wird dabei auf 175°C gehalten. Zur Nachkristallisation wird weitere 15 Stunden (über Nacht) bei gleicher Temperatur gerührt. Anschließend wird das Produkt über das Steigrohr ausgetragen, filtriert und getrocknet. Tabelle 2 zeigt das Röntgenbeugungsdiagramm des Produktes.

TABELLE 1

| Netzebenabstände $d(10^{-8}$ cm) | Relative Intensität (I/Io) |
|---|---|
| 11,3 | 75 |
| 10,2 | 42 |
| 9,88 | 18 |
| 9,07 | 3 |
| 7,53 | 5 |
| 7,17 | 3 |
| 6,78 | 8 |
| 6,44 | 16 |
| 6,05 | 20 |
| 5,77 | 14 |
| 5,62 | 14 |
| 5,42 | 5 |
| 5,17 | 3 |
| 5,07 | 7 |
| 5,01 | 9 |
| 4,90 | 1 |
| 4,65 | 7 |
| 4,48 | 2 |
| 4,40 | 12 |
| 4,29 | 16 |
| 4,12 | 4 |
| 3,95 | 8 |
| 3,88 | 100 |
| 3,84 | 76 |
| 3,78 | 39 |
| 3,75 | 53 |
| 3,68 | 35 |
| 3,62 | 5 |
| 3,57 | 2 |
| 3,51 | 8 |
| 3,47 | 12 |
| 3,42 | 5 |
| 3,39 | 6 |
| 3,38 | 9 |
| 3,33 | 13 |
| 3,27 | 7 |
| 3,20 | 3 |
| 3,16 | 5 |
| 3,07 | 15 |
| 3,01 | 15 |
| 2,99 | 15 |
| 2,96 | 8 |
| 2,88 | 5 |
| 2,85 | 2 |
| 2,80 | 2 |
| 2,75 | 6 |
| 2,69 | 3 |
| 2,67 | 2 |
| 2,65 | 1 |
| 2,63 | 6 |

0131898

| Netzebenabstände $d(10^{-8}cm)$ | Relative Intensität $(I/I_o)$ |
|---|---|
| 2,60 | 4 |
| 2,58 | 3 |
| 2,53 | 5 |
| 2,50 | 7 |
| 2,46 | 2 |
| 2,43 | 4 |
| 2,41 | 5 |
| 2,37 | 1 |
| 2,34 | 3 |

TABELLE 2

| Netzebenabstände d($10^{-8}$ cm) | Relative Intensität (I/Io) |
|---|---|
| 11,2 | 45 |
| 10,0 | 31 |
| 9,71 | 14 |
| 9,02 | 3 |
| 7,46 | 6 |
| 7,08 | 3 |
| 6,73 | 7 |
| 6,39 | 10 |
| 6,02 | 13 |
| 5,71 | 8 |
| 5,60 | 11 |
| 5,37 | 3 |
| 5,15 | 2 |
| 5,01 | 6 |
| 4,62 | 8 |
| 4,48 | 3 |
| 4,37 | 12 |
| 4,27 | 15 |
| 4,11 | 5 |
| 4,00 | 9 |
| 3,85 | 100 |
| 3,82 | 67 |
| 3,75 | 32 |
| 3,72 | 47 |
| 3,65 | 26 |
| 3,60 | 7 |
| 3,49 | 7 |
| 3,44 | 13 |
| 3,37 | 17 |
| 3,31 | 9 |
| 3,26 | 6 |
| 3,14 | 4 |
| 3,06 | 14 |
| 2,99 | 15 |
| 2,86 | 2 |
| 2,73 | 4 |
| 2,61 | 5 |
| 2,57 | 3 |
| 2,52 | 4 |
| 2,49 | 6 |
| 2,40 | 4 |
| 2,01 | 9 |
| 1,996 | 11 |

PATENTANSPRÜCHE:

1. Verfahren zur Herstellung eines Zeoliths des ZSM-5-Typs in wäßriger Phase, ausgehend von einer Alkalioxid-Quelle, einer Siliciumdioxid-Quelle, einer Aluminiumoxid-Quelle und gegebenenfalls einer die Kristallisation des Zeoliths begünstigenden Substanz, wobei das eingesetzte Molverhältnis $SiO_2$ / $Al_2O_3$ 12:1 bis 500:1 beträgt, man die Komponenten in einen Rührkessel eindosiert und bei Temperaturen von 90 bis 250°C mindestens so lange reagieren läßt, daß 10 % des eingesetzten $SiO_2$ in den Zeolith umgewandelt werden, dadurch gekennzeichnet, daß man die Komponenten bei Temperaturen von 90 bis 250°C eindosiert, und man die Reaktion kontinuierlich oder halbkontinuierlich durchführt, wobei die Zugabedauer jeder einzelnen Komponente 1 bis 100 % der Reaktionsdauer betragen soll.

2. Verfahren nach Anspruch 1, dadurch gekennzeichnet, daß man in Gegenwart einer organischen Stickstoff- oder Phosphorverbindung arbeitet, die die Kristallisation des Zeoliths begünstigt.

3. Verfahren nach Anspruch 1, dadurch gekennzeichnet, daß die Zugabedauer jeder einzelnen Komponente 10 bis 100 % der Reaktionsdauer beträgt.

4. Verfahren nach Anspruch 1, dadurch gekennzeichnet, daß der Rührkessel nach Erreichen eines vorgegebenen Füllstands teilweise entleert wird.

5. Verfahren nach Anspruch 1, dadurch gekennzeichnet, daß das Produkt aus dem Rührkessel bei einer Innentemperatur von 90 bis 250°C, vorzugsweise 120-220°C, entfernt wird.

0131898